# FASCICULE DE BREVET EUROPEEN

(11) **EP 0 856 473 B1**
(45) Date de publication et mention de la délivrance du brevet: **14.03.2001**
(21) Numéro de dépôt: 98400141.2
(22) Date de dépôt: 23.01.1998
(51) Int. Cl.: B65D 35/08, C08L 23/16

(54) **Matériau thermoplastique souple et tube compressible constitué de ce matériau**
Geschmeidiges thermoplastisches Material und daraus hergestellte, zusammendrückbare Tube
Pliable thermoplastic material and compressible tube therefrom

(30) Priorité: 04.02.1997 FR 9701227
(43) Date de publication de la demande: 05.08.1998
(73) Titulaire: L'OREAL, 75008 Paris (FR)
(72) Inventeur: Barre, Patrice, 92160 Antony (FR)
(74) Mandataire: Boulard, Denis

(56) Documents cités:
- EP-A- 0 084 922
- EP-A- 0 457 455
- EP-A- 0 518 125
- FR-A- 2 282 447
- US-A- 5 124 193

## Description

La présente invention se rapporte à un mélange thermoplastique et à un conditionnement compressible, du type tube, obtenu avec ce mélange. L'invention vise, plus particulièrement, la réalisation par injection, de tubes souples en matière plastique, compatibles avec le produit contenu dans ces tubes et dont les parois présentent, en outre, suffisamment de souplesse pour être comprimées manuellement, sans pour autant garder des zones de pliures après la compression. Le conditionnement de l'invention est destiné, notamment, à contenir un produit cosmétique, pharmaceutique, dermo-pharmaceutique ou certains produits alimentaires.

A l'heure actuelle, la majorité des conditionnements utilisés, notamment dans le domaine cosmétique, tels que des tubes ou flacons destinés à contenir une crème ou un shampooing, sont réalises en matière plastique. Pour leur fabrication, on utilise généralement des polymères thermoplastiques, et plus particulièrement des polyoléfines appropriées, en passant par un procédé d'extrusion ou d'extrusion-soufflage à l'aide d'un équipement industriel classique.

Les polyoléfines thermoplastiques utilisées, de façon connue, sont généralement les polyéthylènes basse densité, destinés notamment à la fabrication de tubes, et les polyéthylènes haute densité ou les polypropylènes qui sont destinés à la fabrication de flacons. Notamment, les polypropylènes ont de bonnes propriétés d'imperméabilité et à la vapeur d'eau et ont l'avantage d'être compatibles avec la plupart des produits chimiques et sont visés, pour cette raison, par la présente invention.

Les conditionnements visés par l'invention sont généralement du genre de ceux qui présentent une enveloppe périphérique compressible, ouverte à une première extrémité libre, cette extrémité étant destinée à être fermée, après remplissage du produit à distribuer, par pincement, suivi de soudure thermique de ses bords libres. Généralement, la seconde extrémité de l'enveloppe est raccordée, par exemple au moyen d'une zone formant un épaulement, à un goulot d'épaisseur suffisante pour être rigide, le goulot étant traversé par un canal de distribution du produit. Le plus souvent, la section de l'enveloppe est circulaire ou ovale, mais d'autres formes peuvent être envisagées, telle qu'une forme polygonale. Le goulot porte, avantageusement, des moyens de fermeture, tel qu'un filetage pour la fixation d'un bouchon de fermeture, ou un bourrelet de claquage, pour la fixation d'une capsule de distribution. Dans son ensemble, ladite enveloppe doit présenter une forme adaptée à son démoulage après l'injection du mélange thermoplastique dans un moule approprié.

Le moulage proprement dit d'un conditionnement du genre mentionné ci-dessus par injection d'une matière, telle que du polypropylène ayant un indice de fluidité approprié à l'injection, ne pose, en pratique, pas de problème. Cependant, le conditionnement obtenu de cette manière présente deux inconvénients majeurs :
- d'une part, les parois de l'enveloppe ne sont pas suffisamment souples pour être comprimées manuellement, et il est donc difficile de vidanger le tube et,
- d'autre part, ces parois ne reprennent plus leur forme initiale après avoir subi une compression de l'enveloppe et présentent des zones de pliure visibles indésirables, lesquelles présentent, en outre, une coloration blanchâtre inesthétique.

L'objectif principal de la présente invention est donc de trouver un matériau thermoplastique qui soit suffisamment fluide pour permettre de réaliser, par injection, des conditionnements, tels que des tubes compressibles, notamment à paroi mince et suffisamment souple pour être compressibles manuellement, en vue de la distribution du produit. Un autre objectif consiste à trouver un matériau qui résiste, en outre, mieux au pliage de la paroi occasionné lors de la compression du tube, et à réduire voire supprimer la formation de zones blanches dans une zone de paroi pliée préalablement.

Après de nombreuses recherches, la Demanderesse a découvert que l'adjonction d'un copolymère particulier à un homopolymère de polypropylène classique constituait un mélange thermoplastique utilisable pour la fabrication, par injection, d'un conditionnement ayant les propriétés recherchées. Ce mélange présente, en outre une bonne compatibilité avec les produits destinés à être stockés dans ce conditionnement, notamment en présence de certains tensioactifs.

La présente invention a donc pour objet un conditionnement souple en matériau plastique, comportant une paroi comprenant un mélange thermoplastique constitué d'un premier et d'un second polymères, caractérisé en ce qu'il comprend comme premier polymère un homopolymère de propylène (PP) et comme second polymère un copolymère de propylène (PP) et d'éthylène (PE).

Plus particulièrement, l'invention a pour objet un tube, réalisé par injection dudit mélange dans un moule approprié.

Selon un aspect intéressant de l'invention, le mélange thermoplastique présente un indice de fluidité (norme ISO 1133, à 230°C, 2,16 kg) d'environ 25 g/10 min. De par cette fluidité relativement élevée, le mélange est particulièrement adapté au moulage, par injection, d'objets à paroi de faible épaisseur.

Selon un aspect intéressant de l'invention, le premier polymère présente un indice de fluidité (norme ISO 1133) compris entre 20 g/10 min et 200 g/10 min (grade 20 à 200), et de préférence de 100 g/10 min. Avantageusement, le premier polymère est présent dans le mélange dans une proportion d'au plus égale à 50%, et de préférence comprise entre 20% et 35% par rapport au poids total du mélange.

De préférence, le second polymère (copolymère) présente un indice de fluidité (norme ISO 1133) compris entre 5 g/10 min et 20 g/10 min (grade 5 à 20), et de préférence de 8 g/10 min. De manière avantageuse, le second polymère présente un module de flexion, suivant la norme ASTM D790, égal ou inférieur à 200 MPa. Il peut être présent dans le mélange dans une proportion d'au moins égale à 50%, et de préférence comprise entre 65% et 80% par rapport au poids total du mélange.

Selon un mode de réalisation particulièrement intéressant de l'invention, le second polymère est constitué par un copolymère de polypropylène et d'éthylène présentant un module de flexion, suivant la norme ASTM D790, inférieur à 200 Mpa, vendu, par exemple, par la société MONTELL sous la dénomination commerciale ADFLEX®.

Le mélange thermoplastique de l'invention est utilisable, en particulier, pour le moulage, par injection, de tout objet en plastique à paroi mince devant être souple.

Lorsque cet objet est un tube souple, il comporte, avantageusement, une tête relativement rigide constituée d'un épaulement et d'un goulot pourvu d'un orifice de distribution, et une paroi périphérique compressible raccordée à l'épaulement. La paroi périphérique est souple et forme un corps compressible du tube, dans lequel le produit est conditionné. Un bouchon peut être prévu pour boucher l'orifice de distribution pendant la période de stockage. Selon un aspect intéressant de l'invention, la paroi compressible est sensiblement cylindrique, ou de section ovale ou polygonale. Lorsque la section est circulaire, le diamètre externe du tube est compris entre 10 mm et 50 mm, et de préférence entre 25 mm et 35 mm. Avantageusement, la paroi présente une épaisseur comprise entre 0,2 mm et 1,0 mm, et de préférence entre 0,4 mm et 0,7 mm, et plus particulièrement d'environ 0,5 mm.

Dans les conditions de fluidité indiquée du mélange, ainsi de l'épaisseur de paroi envisagée ci-dessus, il est possible de mouler aisément des tubes, dont la longueur de la paroi compressible, mesurée suivant la dimension axiale, est inférieure à 15 cm. De manière préférentielle, un choisit des dimensions telles que le rapport *longueur de la paroi / diamètre de la paroi* du tube, est égal ou inférieur à 4. Selon l'invention, un tel conditionnement est obtenu par injection à chaud dudit mélange dans un moule approprié.

Ainsi, après pincement suivi de soudage de l'extrémité de la paroi compressible opposée à la tête de distribution, on obtient un volume pouvant aller d'environ 5 ml à environ 250 ml, de préférence de 30 ml à 100 ml, et plus particulièrement de 60 ml à 80 ml. Ce volume est destiné à contenir le produit, par exemple un produit cosmétique ou dermatologique. Le volume est variable en fonction de la section du tube et sa longueur.

L'exemple de réalisation donné ci-après, en référence aux dessins annexés, permet de mieux comprendre l'invention.

La figure 1 représente, en élévation, une vue d'un conditionnement conforme à l'invention, avant le soudage du fond.

La figure 2 représente une vue en élévation du conditionnement de la figure 1 après soudage du fond.

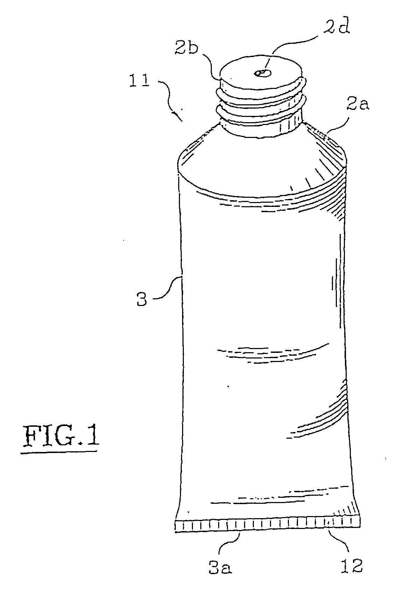

Sur la figure 1, on a désigné par la référence 1 un ensemble de conditionnement conforme à l'invention, présenté sous forme de tube ouvert, tel qu'on l'obtient par injection. Le tube 1, d'axe A, comporte un corps cylindrique formé par une paroi latérale 3 cylindrique pourvue d'une extrémité ouverte 3a. Du côté opposé à l'extrémité 3a, le corps est surmonté d'une tête de distribution 2 comportant un épaulement tronconique 2a, qui se prolonge par un col cylindrique 2b, de diamètre réduit par rapport au diamètre du corps 3. Le col 2b comporte un filetage externe 2c apte à coopérer avec un bouchon de fermeture (non représenté). La tête 2 est pourvue d'un orifice de distribution 2d, de diamètre réduit par rapport au diamètre du col 2b.

Pour remplir le tube 1, on ferme le col 2 par un bouchon, et on retourne l'ensemble, de sorte que l'extrémité ouverte 3a se présente en haut. On coule alors une quantité appropriée de produit dans le tube. A l'aide d'une pince chauffante, on pince l'extrémité libre 3a, et simultanément, on effectue une soudure 12, comme montré sur la figure 2, pour fermer le fond du tube.

### EXEMPLE DE REALISATION

Le tube ouvert 1, comme montré sur la figure 1, est obtenu en injectant dans un moule approprié un mélange de deux polymères en fusion. La température d'injection est d'environ 220°C. Ce mélange comprend :
- de 20 % d'un homopolymère de polypropylène, grade 100 (vendu par la société MONTELL sous la dénomination commerciale MOPLEN EPN31MA), et
- de 80 % d'un copolymère de propylène et d'éthylène grade 8 (vendu par la société MONTELL sous la dénomination commerciale ADFLEX X X100G). Ce tube comporte la tête 2 et la paroi latérale 3. La hauteur de la paroi 3, selon l'axe A, est d'environ 9 cm, l'épaisseur de ladite paroi 3 étant d'environ 0,5 mm.

Après remplissage du tube par le produit, on pince l'extrémité ouverte 3a du tube, et on ferme ladite extrémité par thermosoudage. On obtient alors le tube 11 dans sa forme finale, telle que représenté sur la figure 2. On voit que l'extrémité 3a est fermée maintenant, présentant une bande de soudure 12. Du fait de la faible épaisseur de la paroi 3, le tube 11 est facilement déformable, par compression, par un utilisateur qui souhaite prélever une dose de produit.

Le prix de fabrication d'un tube conforme à l'invention est sensiblement inférieur au prix d'un tube fabriqué par extrusion.

## Revendications

1. Conditionnement souple en matériau plastique, comportant une paroi comprenant un mélange thermoplastique constitué d'un premier et d'un second polymères, caractérisé en ce qu'il comprend comme premier polymère un homopolymère de propylène (PP) et comme second polymère un copolymère de propylène (PP) et d'éthylène (PE).

2. Conditionnement selon la revendication 1, caractérisé par le fait que le mélange thermoplastique présente un indice de fluidité (norme ISO 1133) d'environ 25 g/10 min.

3. Conditionnement selon la revendication 1 ou 2, caractérisé par le fait que le premier polymère présente un indice de fluidité (norme ISO 1133) compris entre 20 g/10 min et 200 g/10 min (grade 20 à 200).

4. Conditionnement selon l'une des revendications 1 à 3, caractérisé par le fait que le second polymère présente un indice de fluidité (norme ISO 1133) compris entre 5 g/10 min et 20 g/10 min (grade 5 à 20).

5. Conditionnement selon l'une des revendications 1 à 4, caractérisé par le fait que le premier polymère est présent dans une proportion d'au plus égale à 50%, et de préférence comprise entre 20% et 35%, par rapport au poids total du mélange.

6. Conditionnement selon l'une des revendications 1 à 5, caractérisé par le fait que le second polymère est présent dans une proportion d'au moins égale à 50%, et de préférence comprise entre 65% et 80%, par rapport au poids total du mélange.

7. Conditionnement selon l'une quelconque des revendications 1 à 6, caractérisé par le fait que le second polymère présente un module de flexion selon la norme ASTM D790 égal ou inférieur à 200 Mpa.

8. Conditionnement selon l'une quelconque des revendications 1 à 7, caractérisé en ce que la paroi présente une épaisseur comprise entre 0,2 mm et 1,0 mm, et de préférence entre 0,4 mm et 0,7 mm.

9. Conditionnement selon l'une des revendications 1 à 8, caractérisé par le fait qu'il se présente sous forme de tube.

10. Conditionnement selon la revendication 9, caractérisé en ce que la paroi du tube présente un rapport *longueur/diamètre* égal ou inférieur à 4.

11. Conditionnement selon l'une quelconque des revendications 1 à 10, caractérisé par le fait qu'il comporte un fond obtenu par pincement de l'extrémité libre de la paroi, suivi de thermo-soudage.

12. Conditionnement selon l'une quelconque des revendications 1 à 11, caractérisé par le fait qu'il est obtenu par injection dudit mélange dans un moule approprié.

13. Conditionnement selon l'une quelconque des revendications 1 à 12, caractérisé par le fait qu'il contient un produit cosmétique ou dermatologique.

## Patentansprüche

1. Flexible Verpackung aus Kunststoff, die eine Wand aufweist, welche ein thermoplastisches Gemisch enthält, das aus einem ersten und aus einem zweiten Polymer besteht, dadurch gekennzeichnet, daß das erste Polymer ein Homopolymer von Propylen (PP) und das zweite Polymer ein Copolymer von Propylen (PP) und Ethylen (PE) ist.

2. Verpackung nach Anspruch 1, dadurch gekennzeichnet, daß das thermoplastische Gemisch einen Schmelzindex (Norm ISO 1133) von etwa 25 g/10 min aufweist.

3. Verpackung nach Anspruch 1 oder 2, dadurch gekennzeichnet, daß das erste Polymer einen Schmelzindex (Norm ISO 1133) von 20 bis 200 g/10 min (Festigkeit 20 bis 200) aufweist.

4. Verpackung nach einem der Ansprüche 1 bis 3, dadurch gekennzeichnet, daß das zweite Polymer einen Schmelzindex (Norm ISO 1133) von 5 bis 20 g/10 min (Festigkeit 5 bis 20) aufweist.

5. Verpackung nach einem der Ansprüche 1 bis 4, dadurch gekennzeichnet, daß das erste Polymer in einem Mengenanteil von höchstens 50 % und vorzugsweise im Bereich von 20 bis 35 %, bezogen auf das Gesamtgewicht des Gemisches, vorliegt.

6. Verpackung nach einem der Ansprüche 1 bis 5, dadurch gekennzeichnet, daß das zweite Polymer in einem Mengenanteil von mindestens 50 % und vorzugsweise im Bereich von 65 bis 80 %, bezogen auf das Gesamtgewicht des Gemisches, vorliegt.

7. Verpackung nach einem der Ansprüche 1 bis 6, dadurch gekennzeichnet, daß das zweite Polymer einen Biegemodul (Norm ASTM D790) von 200 MPa oder darunter aufweist.

8. Verpackung nach einem der Ansprüche 1 bis 7, dadurch gekennzeichnet, daß die Wand eine Dicke von 0,2 bis 1,0 mm und vorzugsweise 0,4 bis 0,7 mm aufweist.

9. Verpackung nach einem der Ansprüche 1 bis 8, dadurch gekennzeichnet, daß sie als Tube vorliegt.

10. Verpackung nach Anspruch 9, dadurch gekennzeichnet, daß das Verhältnis von Länge zu Durchmesser der Tubenwand 4 ist oder darunter liegt.

11. Verpackung nach einem der Ansprüche 1 bis 10, dadurch gekennzeichnet, daß sie einen Boden aufweist, der hergestellt wird, indem das freie Ende der Wand zusammengedrückt und thermisch verschweißt wird.

12. Verpackung nach einem der Ansprüche 1 bis 11, dadurch gekennzeichnet, daß sie durch Spritzen des Gemisches in einer geeigneten Form hergestellt wird.

13. Verpackung nach einem der Ansprüche 1 bis 12, dadurch gekennzeichnet, daß sie ein kosmetisches oder dermatologisches Erzeugnis enthält.

## Claims

1. Pliant container made of plastic, having a wall comprising a thermoplastic compound consisting of a first and a second polymer, characterized in that it comprises as first polymer a propylene homopolymer (PP) and as second polymer a propylene (PP)/ethylene (PE) copolymer.

2. Container according to Claim 1, characterized in that the thermoplastic compound has a melt flow index (ISO 1133 standard) of about 25 g/10 min.

3. Container according to Claim 1 or 2, characterized in that the first polymer has a melt flow index (ISO 1133 standard) of between 20 g/10 min. and 200 g/10 min. (grade 20 to 200).

4. Container according to one of Claims 1 to 3, characterized in that the second polymer has a melt flow index (ISO 1133 standard) of between 5 g/10 min. and 20 g/10 min. (grade 5 to 20).

5. Container according to one of Claims 1 to 4, characterized in that the first polymer is present in an amount of at most 50%, and preferably between 20% and 35%, with respect to the total weight of the compound.

6. Container according to one of Claims 1 to 5, characterized in that the second polymer is present in an amount of at most 50%, and preferably between 65% and 80%, with respect to the total weight of the compound.

7. Container according to any one of Claims 1 to 6, characterized in that the second polymer has a flexural modulus according to the ASTM D790 standard of less than or equal to 200 MPa.

8. Container according to any one of Claims 1 to 7, characterized in that the wall has a thickness of between 0.2 mm and 1.0 mm and preferably between 0.4 mm and 0.7 mm.

9. Container according to one of Claims 1 to 8, characterized in that it is in the form of a tube.

10. Container according to Claim 9, characterized in that the wall of the tube has a length/diameter ratio of less than or equal to 4.

11. Container according to any one of Claims 1 to 10, characterized in that it has a bottom obtained by pinching the free end of the wall, followed by heat-welding.

12. Container according to any one of Claims 1 to 11, characterized in that it is obtained by injection moulding the said compound in a suitable mould.

13. Container according to any one of Claims 1 to 12, characterized in that it contains a cosmetic or dermatological product.
